# EUROPÄISCHE PATENTSCHRIFT

(11) **EP 2 591 875 B1**
(45) Veröffentlichungstag und Bekanntmachung des Hinweises auf die Patenterteilung: **25.01.2017**
(21) Anmeldenummer: 11401625.6
(22) Anmeldetag: 09.11.2011
(51) Int. Cl.: B23K 26/073, B23K 26/06

(54) **Laser mit Strahltransformationslinse**
Laser with beam transformation lens
Laser doté d'une lentille de transformation du rayonnement

(43) Veröffentlichungstag der Anmeldung: 15.05.2013
(73) Patentinhaber: Leister Technologies AG, 6056 Kägiswil (CH)
(72) Erfinder: Gubler, Ulrich, 6343 Rotkreuz (CH); Vogler, Daniel, 6005 Luzern (CH); Didden, Thomas, 4701 Kettenis (BE)
(74) Vertreter: Klocke, Peter

(56) Entgegenhaltungen:
- US-A1- 2005 272 184
- US-A1- 2008 299 496

## Beschreibung

Die Erfindung betrifft einen Laser zur Bearbeitung von Werkstücken, mit einer Laserstrahlquelle zur Erzeugung eines Laserstrahls, der ein inhomogenes Strahlprofil aufweist, und mit einer in Abstrahlrichtung nach der Laserstrahlquelle angeordneten Laseroptik zur Formung des Laserstrahls und zur Projizierung des Laserstrahls auf die Werkstücke, wobei zwischen der Laseroptik und den Werkstücken eine Lasermaske nahe den Werkstücken angeordnet ist (siehe US-A-2008/0299496).

Laser werden heutzutage bei einer Vielzahl von Bearbeitungsvorgängen von Werkstücken verwendet. Ein solcher Bearbeitungsvorgang beinhaltet beispielsweise die Verwendung eines Lasers zum Umformen, Strukturieren, Trennen, Bohren, Abtragen, Verbinden, Beschichten, Temperieren, Beschriften oder Belichten eines Werkstückes. Abhängig von der Art der Bearbeitung und dem zu bearbeitenden Material des Werkstückes kommen in der Regel unterschiedliche Laserstrahlquellen zum Einsatz, die sich in dem im Laserresonator eingesetzten aktiven optischen Lasermedium und damit in der Wellenlänge, der Kohärenz, der Energiedichte, im Strahlprofil und in der Strahldivergenz des erzeugten Laserstrahls unterscheiden. Dabei kann die Laserstrahlquelle kontinuierlich oder gepulst betrieben sein.

Üblicherweise ist in Abstrahlrichtung des Lasers nach der Laserstrahlquelle eine Laseroptik zur Strahlformung des erzeugten Laserstrahls angeordnet, die das üblicherweise runde ursprüngliche Strahlprofil im Durchmesser verändert oder in ein linienförmiges Strahlprofil umwandelt und auf das Werkstück fokussiert. Dabei kann der Laserstrahl auf die zu bearbeitenden Bereiche des Werkstückes entweder punktuell-sequenziell, quasi-simultan oder simultan einwirken. Bei der punktuell-sequenziellen Bearbeitung werden der Laser und das Werkstück relativ zueinander langsam bewegt, bei der quasi-simultanen Bearbeitung wird der Laserstrahl beispielsweise mittels einer Scannereinheit sehr schnell über das Werkstück geführt, während bei der simultanen Bearbeitung weder der Laser noch das Werkstück gegeneinander verschoben werden.

Für eine flächenhafte Bearbeitung von Werkstückes ist es häufig sinnvoll, einen von der Laseroptik linienförmig geformten Laserstrahl zu verwenden. Damit kann die Bearbeitungszeit eines Werkstückes deutlich gegenüber der bei der Verwendung eines von der Laseroptik rund geformten Laserstrahls reduziert werden, da die Länge des linienförmigen Laserstrahls den Durchmesser des runden Laserstrahls deutlich übertrifft. Bei der flächenhaften Bearbeitung des Werkstückes mit dem linienförmigen Laserstrahl, der senkrecht zu seiner Längserstreckung relativ zu dem Werkstück bewegt wird, können dennoch grobe oder feine Strukturierungen des Werkstückes erfolgen, indem eine Lasermaske, die die groben oder feinen Strukturen enthält, zwischen der Laseroptik und den Werkstücken angeordnet wird. Um durch die Lasermaske bedingte Beugungseffekte und unscharfe Schlagschatten weitgehend zu minimieren, ist es bekannt, die Lasermaske mit möglichst geringem Abstand zu dem Werkstück anzuordnen. Dabei wird der linienförmige Laserstrahl stellenweise durch die Lasermaske blockiert, so dass das Laserlicht nur die für die Ausbildung der Strukturen zu bearbeitenden Bereiche des Werkstücks erreichen kann. Die Lasermaske ermöglicht es, feinste Strukturen im Mikrometerbereich auf einem Werkstück herzustellen. Deshalb erzielt die Maskenbearbeitung von Werkstücken eine sehr hohe Auflösung. Mit einer solchen Lasermaske lassen sich vielfältigste Strukturen auf Werkstücken in einem Arbeitsgang ausbilden, beispielsweise gerade und gekrümmte Linien bzw. Bahnen unterschiedlicher Breite sowie flächige Partien beliebiger Größe. Derartige Lasermasken werden beispielsweise beim Maskenschweißen von Kunststoffteilen verwendet.

Das Maskenschweißen von Kunststoffwerkstücken ist beispielsweise aus der Patentschrift EP 0 997 261 B1 bekannt. Diese Druckschrift offenbart ein Verfahren und eine Vorrichtung zum Laserfügen von Kunststoffen, die durch Andrücken in Kontakt miteinander gebracht werden, wobei das der Laserstrahlquelle nächstliegende Werkstück für die Laserstrahlen weitgehend transparent und das zweite Werkstück möglichst absorbierend ist. Durch das Richten eines linienförmig geformten Laserstrahls auf die Werkstücke, über denen eine strukturierte Lasermaske angeordnet ist, die entsprechend der gewünschten Fügenahtstruktur ausgebildet ist, und eine Relativbewegung des Laserstrahls zu den Werkstücken werden die Werkstücke präzise nur in den gewünschten Fügebereichen miteinander verbunden. Dies ermöglicht eine hoch präzise Verbindung bei kleinsten Fügenahtabständen, so dass unter anderem auch Teile für die Mikrosystemtechnik mit kurzer Taktzeit hergestellt werden können. Bei diesem Stand der Technik ist der linienförmige Laserstrahl durch einen Laserdiodenbarren generiert, der aus einer Vielzahl von einzelnen Emittern besteht. Die Homogenität entlang der Laserlinie ist genügend gut, jedoch ist die Strahlung nicht vollständig parallelisiert (kollimiert), so dass ein unscharfer Schlagschatten auf dem von der Lasermaske beabstandeten Werkstück entsteht. Alternativ kann auch ein Laser mit rundem Strahlprofil verwendet werden, der durch eine Zylinderlinse(n) aufgeweitet wird. Die Parallelität der Strahlung kann so verbessert werden jedoch bleibt die inhomogene Leistungsverteilung des eingehenden Strahls in etwa erhalten.

Ausgehend von dem vorstehend beschriebenen Stand der Technik liegt der Erfindung die Aufgabe zugrunde, eine Möglichkeit vorzuschlagen unscharfe Schlagschatten, die durch einen schlecht kollimierten Laserstrahl in Verbindung mit der Lasermaske bedingt sind, auf dem von der Laserstrahlquelle mit Laserlicht beaufschlagten Werkstück vorzubeugen und gleichzeitig eine homogene Leistungsverteilung auf den bestrahlten Flächen sicherzustellen.

Diese Aufgabe wird erfindungsgemäß durch ein Laserbearbeitungssystem mit den Merkmalen des Anspruchs 1 gelöst. Weitere vorteilhafte Ausgestaltungen sind den rückbezogenen Patentansprüchen zu entnehmen.

Kerngedanke der Erfindung ist es, die Lasermaske mit einem linienförmigen Laserstrahl zu bestrahlen, der zum einen eine vollständig homogene Leistungsdichteverteilung des Strahlprofils aufweist und der zum anderen keine bzw. eine äußerst kleine Strahldivergenz besitzt. Bei der Laserbearbeitung erfolgt durch die parallele Strahlung des Laserlichtes der Schattenwurf mit scharfen Randkonturen, so dass die Projektion der Lasermaske auch bei größerer Distanz zu der Bearbeitungsfläche des Werkstückes nicht unscharf ist. Dies wird durch das homogene Strahlprofil des Laserstrahls noch unterstützt, wobei die Projektion der Lasermaske mittels Laserlicht homogener Leistungsdichteverteilung bewirkt, dass die Bearbeitung des Werkstückes gleichmäßig über die gesamte projizierte Struktur der Lasermaske erfolgt.

Das erfindungsgemäße Laserbearbeitungssystem zur Bearbeitung von Werkstücken mittels Laserlicht in Verbindung mit einer Lasermaske weist eine Laseroptik mit einer Strahltransformationslinse zur Homogenisierung des ursprünglichen Strahlprofils eines von einer Laserstrahlquelle ausgehenden Laserstrahls auf, wobei in Abstrahlrichtung nach der Strahltransformationslinse ein optisches Element, beispielsweise eine Kollimationslinse, zur Kollimierung des Laserstrahls angeordnet ist. Der von der Laserstrahlquelle erzeugte Laserstrahl weist einen runden Strahlquerschnitt und ein inhomogenes Strahlprofil auf. Die Laseroptik ist in Abstrahlrichtung der Laserstrahlquelle nach der Laserstrahlquelle angeordnet und homogenisiert nicht nur das ursprüngliche Strahlprofil des Laserstrahles, sondern formt auch die Kontur des Laserstrahls und bildet das Strahlprofil auf dem Werkstück ab.

Das Strahlprofil eines Laserstrahls ist abhängig davon, in welchem transversalen Schwingungsmode die Laserstrahlquelle betrieben wird. Im TM₀₀-Mode oder TE₀₀-Mode ist die Intensitätsverteilung des Laserlichtes einer Gauß-Kurve angenähert und damit entsprechend inhomogen ausgebildet. Das Strahlprofil weist mittig ein Intensitätsmaximum auf, das zum Rand hin stark abfällt. Bei höheren TM_{NM}-Modes treten mehrere derartige, nebeneinander angeordnete, sich seitlich überlagernde Intensitätsmaxima mit abfallenden Flanken auf, so dass die Intensitätsverteilung noch inhomogener ist. Die Strahltransformationslinse homogenisiert in jedem Fall die Intensitätsverteilung des Strahlprofils des Laserstrahls führt zu einer gleichmäßigen Intensität des Laserlichtes nach der Strahltransformationslinse über das gesamte Strahlprofil hinweg. Dazu weist die Strahltransformationslinse Freiformgrenzflächen auf, die den in Abstrahlrichtung der Laserstrahlquelle vor der Strahltransformationslinse runden oder ovalen Strahlquerschnitt des Laserstrahls in einen rechteckigen länglichen, insbesondere linienförmigen Strahlquerschnitt umformen. Eine derartige Strahltransformationslinse erzeugt insbesondere den linienförmigen Strahlquerschnitt mit einer hohen Homogenität des linienförmigen Strahlprofils.

Bei einer bevorzugten Ausführungsform der Erfindung folgt der Freiformgrenzfläche eine weiteres optisches Element, das die Winkeldivergenz des Laserstrahls zumindest teilweise, idealerweise deutlich reduziert und dabei den Laserstrahl entlang der Längserstreckungsrichtung des linienförmigen Strahlquerschnitts der Laserlichtlinie parallelisiert. Dieses weitere optische Element kann beispielsweise eine separate oder eine mit der Strahltransformationslinse an einander zugewandten optischen Grenzflächen verbundene Linse sein. Insbesondere können das optische Element zur Kollimierung des Laserstrahls und die optische Strahltransformationslinse zur Homogenisierung des Laserstrahls gemeinsam einstückig ausgebildet sein. Dabei weist die so gebildete optische Einheit zusätzlich zu der der Laserstrahlquelle zugeordneten Freiformgrenzfläche eine weitere optische Grenzfläche auf, die der Lasermaske zugeordnet ist. Durch die äußerst geringe Strahldivergenz des Laserstrahls nach der Strahltransformationslinse, d. h. durch die parallele Strahlung des Laserlichtes, wird die Kantenunschärfe des Schlagschattens beim Schattenwurf durch die Lasermaske deutlich minimiert, im Idealfall vollständig verhindert, sodass die auf dem Werkstück abgebildete Projektion der Lasermaske und damit die erzeugten Strukturen dort scharfe Strukturränder aufweisen.

Bei einer begünstigten Ausführungsform des erfindungsgemäßen Laserbearbeitungssystems ist als Strahltransformationslinse eine Powell-Linse gewählt. Die verwendete Powell-Linse hat im wesentlichen zwei angeschrägte Flächen, ähnlich einem Dach, und oben an der Dachkante eine Rundung (asphärische Krümmung), die in etwa dem Durchmesser des einfallenden Laserstrahls entspricht. Eine derartige Linse homogenisiert das Laserlicht unter Bildung des linienförmigen Laserstrahls. Der so gebildete Laserlichtvorhang kann für die Bearbeitung des Werkstückes relativ zu dem Werkstück gleichzeitig quer zur Längserstreckungsrichtung der Laserlichtlinie bewegt werden.

Es ist von Nutzen, wenn der von der Laserstrahlquelle ausgehende Laserstrahl bereits eine geringe Strahldivergenz aufweist, so dass die Parallelisierung des Laserstrahls quer zu der Längserstreckungsrichtung der Laserlichtlinie schon gegeben oder einfach realisierbar ist, so dass der Laserstrahl nach der Laseroptik keine Divergenz mehr in dieser Querrichtung aufweist. Vorzugsweise ist bei dem erfindungsgemäßen Laserbearbeitungssystem eine Laserstrahlquelle vorgesehen, die einen Laserstrahl hoher Güte, d. h. mit einer Beugungsmaßzahl M² < 10 abstrahlt.

Vorzugsweise wird als Laserstrahlquelle ein Faserlaser verwendet. Ein Faserlaser ist eine spezielle Form eines Festkörperlasers, bei dem der dotierte Kern einer Glasfaser das aktive Medium des Laserresonators bildet. Faserlaser verfügen über einzigartige Eigenschaften, so zum Beispiel einen elektrisch-optischen Wirkungsgrad > 30 %, eine Strahlqualität mit einer Beugungsmaßzahl M² < 1,1 beim Single-Mode-Faserlaseraufbau, eine hohe Lebensdauer von mehr als 20.000 Stunden und einen kompakten, wartungsfreien und unempfindlichen Aufbau. Wird der Laserstrahl eines solchen Faserlasers wie üblich mit herkömmlichen Linsen oder Spiegeln umgeformt, so erhält man zwar einen sehr gut kollimierten Strahl, jedoch ist dessen Energieverteilung weiterhin Gauß-förmig und damit nicht wie gewünscht homogen verteilt. Mittels der Powell-Linse hingegen kann für einen fixen Durchmesser eines Gauß'schen Strahls oder einer anderen fixen Strahlform eine homogene Intensitätsverteilung des Strahlprofils erzielt werden.

Da der Strahldurchmesser des in die Strahltransformationslinse eintretenden Laserstrahls bedeutend kleiner ist als bei dem linienförmig aus der Strahltransformationslinse austretenden Laserstrahl in Längserstreckungsrichtung der Laserlichtlinie, muss das Laserlicht für die zu erzielende Linienlänge von einem virtuellen Punkt der Strahltransformationslinse ausgehen und in Längserstreckungsrichtung des linienförmigen Strahlprofils mehr oder weniger mit homogener Lichtverteilung auseinander laufen.

Zur Reduzierung der Winkeldivergenz des Laserstrahls, entlang der Längserstreckungsrichtung der Laserlichtlinie, vorzugsweise zur Parallelisierung des Laserstrahls in dieser Richtung, weist die Laseroptik vorzugsweise eine zylindrische Feldlinse auf, die in Abstrahlrichtung der Laserstrahlquelle nach der Strahltransformationslinse mit oder ohne Abstand angeordnet ist. Idealerweise weist die zu der Strahlformung des aus der Strahltransformationslinse austretenden Laserstrahls vorgesehene Feldlinse zu der Strahltransformationslinse einen Abstand auf, der in etwa der Brennweite der Feldlinse entspricht. Durch die zylindrische Feldlinse wird die homogene Lichtverteilung des austretenden Laserstrahls kollimiert, sodass man die gewünschte Strahlung für die Laserbearbeitung des Werkstückes erhält, die durch ein stark homogenes Strahlprofil ohne Strahldivergenz gekennzeichnet ist.

Bei einer Variante des erfindungsgemäßen Laserbearbeitungssystems weist die Laseroptik mindestens eine Zylinderlinse auf, die in Abstrahlrichtung der Laserstrahlquelle vor und/oder nach der Strahltransformationslinse angeordnet ist. Mit Hilfe der mindestens einen Zylinderlinse kann insbesondere Einfluss auf die Linienbreite des auf das Werkstück gerichteten linienförmigen Laserstrahls genommen werden. Um die Linienbreite zu definieren, kann beispielsweise vor der Strahltransformationslinse ein Teleskop aus zwei Zylinderlinsen vom Galileo- oder Keppler-Typ angeordnet sein, mit denen die Linienbreite unabhängig von der Linienlänge eingestellt werden kann. Die beiden Zylinderlinsen können jedoch auch nach der Strahltransformationslinse angeordnet sein oder je eine davor und eine danach.

Da das Design der Strahltransformationslinse jeweils nur für einen bestimmten Strahldurchmesser des Gauß'schen Profils stimmt, muss eventuell auch der einfallende Strahl in der Richtung der Linienlänge zuerst auf den richtigen Strahlquerschnitt, d. h. einen geeigneten Durchmesser gebracht werden. Dies kann mit einem analogen Teleskop wie bei der Linienbreite geschehen, allerdings müssen diese Zylinderlinsen auf jeden Fall vor der Strahltransformationslinse angeordnet sein.

Wird ein Teleskop für die Definition der Linienbreite und senkrecht dazu ein weiteres Teleskop für die Bestimmung des richtigen Strahldurchmessers für die Strahltransformationslinse benötigt, so kann zumindest eine der Linsen natürlich auch eine sphärische Linse sein, anstatt einer Zylinderlinse.

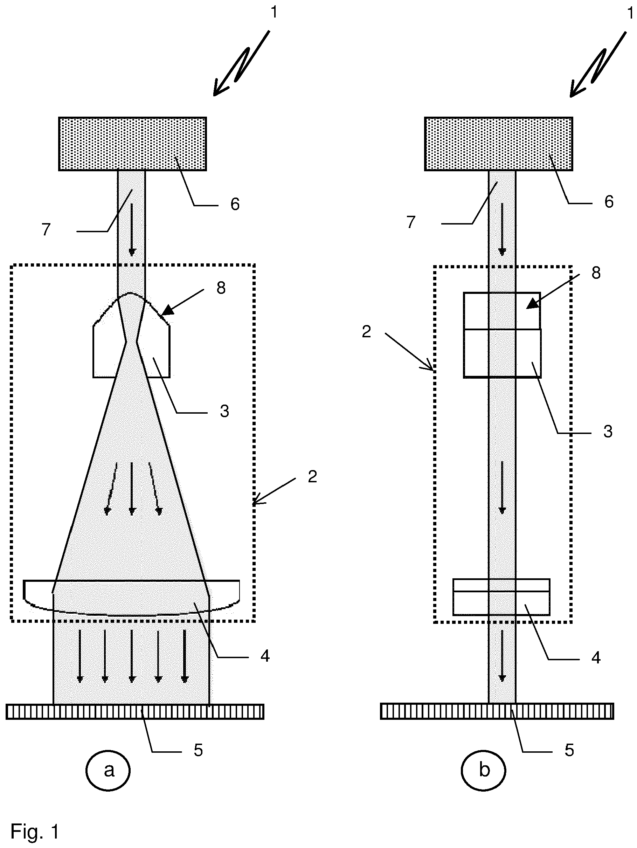

Nachfolgend wird die Erfindung anhand von zwei in der Zeichnung dargestellten Ausführungsbeispielen näher erläutert. Weitere Merkmale der Erfindung ergeben sich aus der folgenden Beschreibung des Ausführungsbeispiels der Erfindung in Verbindung mit den Ansprüchen und der beigefügten Zeichnung. Die einzelnen Merkmale der Erfindung können für sich allein oder zu mehreren bei unterschiedlichen Ausführungsformen der Erfindung verwirklicht sein. Es zeigen
- Figur 1: ein erfindungsgemäßes Laserbearbeitungssystem mit einer Laseroptik, die eine Strahltransformationslinse und eine Feldlinse aufweist, mit Blickrichtung senkrecht (Figur 1a) und parallel (Figur 1 b) zu der Längserstreckungsrichtung des Strahlquerschnitts des linienförmigen Laserstrahls;

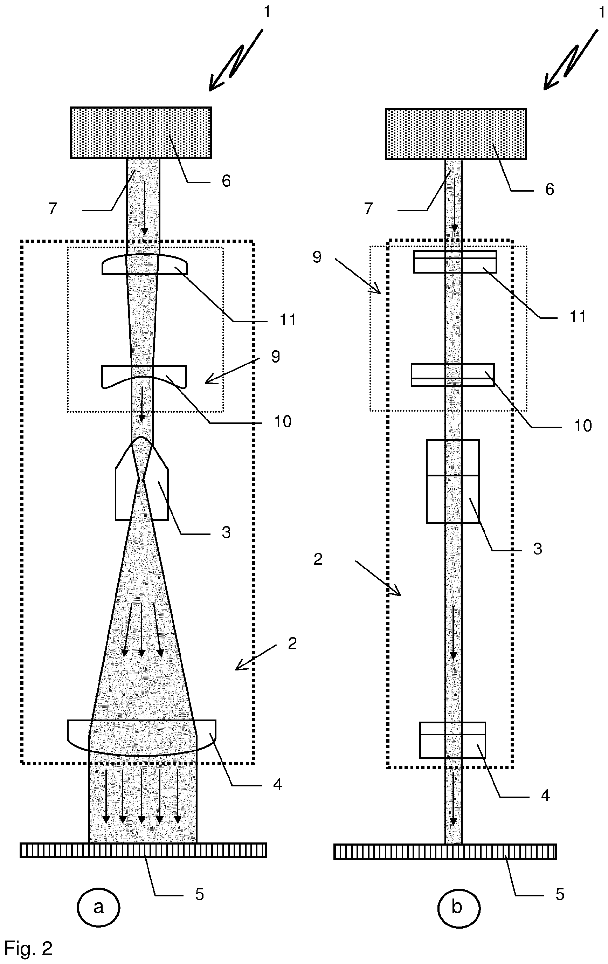

- Figur 2: ein erfindungsgemäßes Laserbearbeitungssystem mit einer Laseroptik, die eine Strahltransformationslinse, eine Feldlinse und ein Teleskop aus zwei Zylinderlinsen zur Anpassung des Strahlquerschnitts des Laserstrahls an die Strahltransformationslinse aufweist, mit Blickrichtung senkrecht (Figur 2a) und parallel (Figur 2b) zu der Längserstreckungsrichtung des Strahlquerschnitts des linienförmigen Laserstrahls;

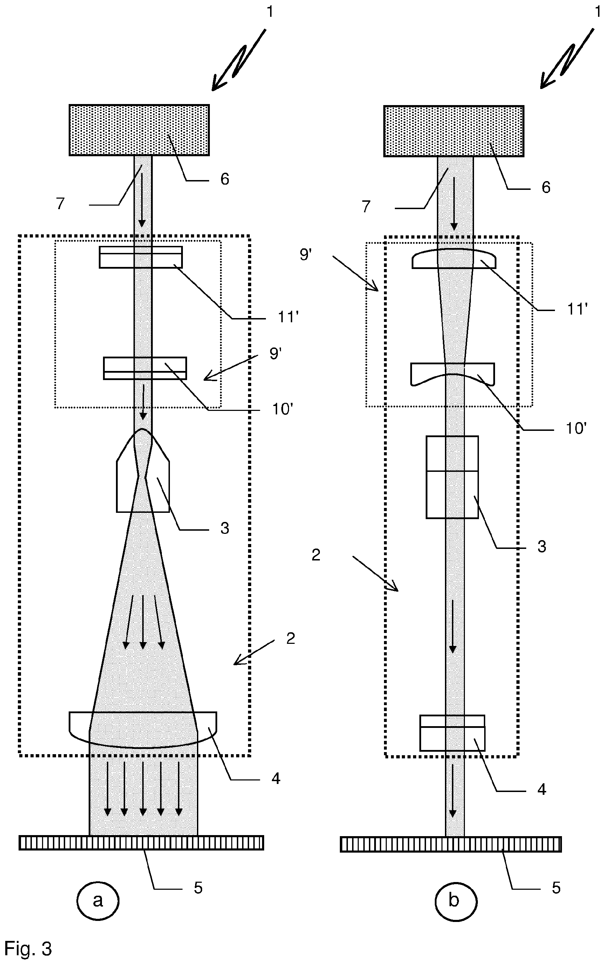

- Figur 3: ein erfindungsgemäßes Laserbearbeitungssystem mit einer Laseroptik, die eine Strahltransformationslinse, eine Feldlinse und ein Teleskop aus zwei Zylinderlinsen zur Bestimmung der Linienbreite des Laserstrahls aufweist, mit Blickrichtung senkrecht (Figur 3a) und parallel (Figur 3b) zu der Längserstreckungsrichtung des Strahlquerschnitts des linienförmigen Laserstrahls, und

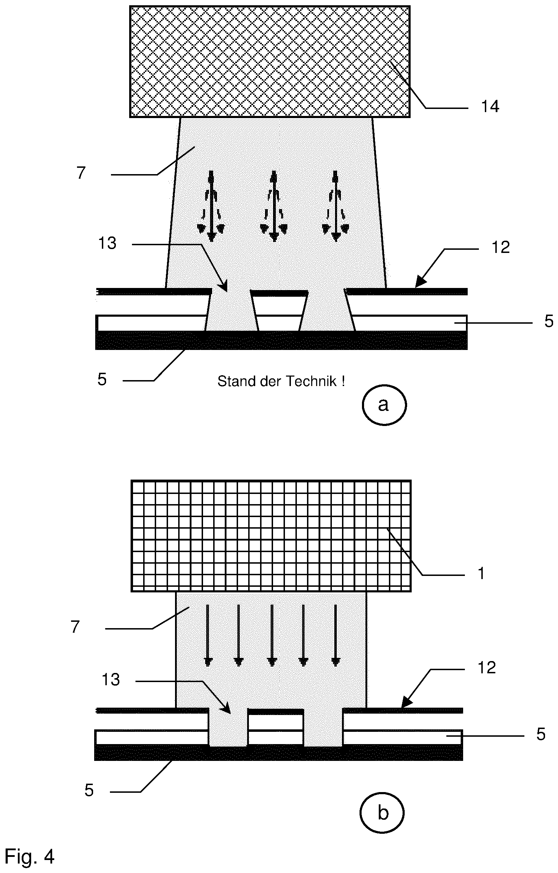

- Figur 4: eine Gegenüberstellung der Strahlbeaufschlagung der Werkstücke beim Kunststoffschweißen unter Verwendung der aus der Patentschrift EP 0 997 261 B1 bekannten Schweißvorrichtung (Figur 4a) und des erfindungsgemäßen Laserbearbeitungssystems (Figur 4b).

Die Figuren 1a, 1b zeigen in schematischer Darstellung ein erfindungsgemäßes Laserbearbeitungssystem 1 mit einer Laseroptik 2, die eine Strahltransformationslinse 3 und eine Feldlinse 4 umfasst. Das Laserbearbeitungssystem 1 ist für die Laserbearbeitung beliebiger geeigneter Werkstücke 5 vorgesehen und weist eine Laserstrahlquelle 6 auf, die einen Laserstrahl 7 erzeugt. Der von der Laserstrahlquelle 6, vorzugsweise einem Faserlaser, ausgehende Laserstrahl 7 weist eine äußerst geringe Strahldivergenz, einen im Wesentlichen runden Strahlquerschnitt und ein inhomogenes Gauß-förmiges Strahlprofil auf. Der Laserstrahl 7 passiert zuerst die Strahltransformationslinse 3, die das Strahlprofil des Laserstrahls 7 derart transformiert, dass es über den gesamten Strahlquerschnitt äußerst homogen ist. Außerdem transformiert die Strahltransformationslinse 3, die vorzugsweise von einer Powell-Linse gebildet ist, den runden Strahlquerschnitt des Laserstrahls 7 in einen rechteckigen länglichen, insbesondere linienförmigen Strahlquerschnitt, dessen Linienlänge und Linienbreite allein von der Geometrie der Strahltransformationslinse 3 und dem Strahlquerschnitt des darauf gerichteten Laserstrahls 7 bestimmt ist.

Für die Transformation weist die Strahltransformationslinse 3 speziell ausgebildete Freiformgrenzflächen 8 auf. Dies sind bei der dargestellten Powell-Linse im Wesentlichen zwei angeschrägte Flächen, ähnlich einem Dach, und oben an der Dachkante eine Rundung (asphärische Krümmung), die in etwa dem Durchmesser des auftreffenden Laserstrahls 7 entspricht. Aus der Strahltransformationslinse 3 tritt der Laserstrahl 7 als Laserlichtvorhang aus, der sich in Richtung der Linienbreite des Strahlquerschnittes parallel ohne Aufweitung erstreckt und der in Richtung der Linienlänge stark fächerförmig auseinander läuft. Der so transformierte Laserstrahl 7 mit seinem rechteckigem länglichem Strahlquerschnitt trifft dann auf die Feldlinse 4, die zylindrisch ausgebildet ist und das Laserlicht derart kollimiert, dass der Laserstrahl 7 anschließend ausschließlich senkrecht auf das Werkstück 5 gerichtet ist.

Die Figuren 2a, 2b zeigen eine erweiterte Ausführungsform des erfindungsgemäßen Laserbearbeitungssystems 1, bei der zwischen der Laserstrahlquelle 6 und der Strahltransformationslinse 3 ein Teleskop 9 angeordnet ist, das beispielsweise von zwei Zylinderlinsen 10, 11 gebildet ist. Da das Design der Strahltransformationslinse 3 nur für einen bestimmten Strahldurchmesser des Gauß'schen Strahlprofils stimmt, muss eventuell auch der einfallende Laserstrahl 7 in Richtung der Linienlänge zuerst auf den richtigen Durchmesser gebracht werden. Mit dem Teleskop 9, das Teil der Laseroptik 2 ist, kann der Strahlquerschnitt im Durchmesser verändert, insbesondere an die Strahltransformationslinse 3 angepasst werden.

Die Figuren 3a, 3b zeigen eine weitere Ausführungsform des erfindungsgemäßen Laserbearbeitungssystems 1, bei dem ein Teleskop 9', beispielsweise zwei Zylinderlinsen 10', 11', die in orthogonaler Richtung um 90° gedreht gegenüber den in der Figur 2 abgebildeten Zylinderlinsen 10, 11 im Hinblick auf die Strahltransformationslinse 3 angeordnet sind. Mit dem Teleskop 9', das Teil der Laseroptik 2 ist, kann die Linienbreite des nach der Strahltransformationslinse 3 linienförmigen Laserstrahls 7 eingestellt werden. Insbesondere kann mit dem Teleskop 9' die Linienbreite des linienförmigen Laserstrahls 7 unabhängig von der Linienlänge des Laserstrahls 7 eingestellt werden.

Wenn erforderlich kann die Laseroptik 2 ein Teleskop 9 und ein Teleskop 9' aufweisen, wobei das Teleskop 9 in Abstrahlrichtung der Laserstrahlquelle 6 vor der Strahltransformationslinse 3 angeordnet ist und von den beiden Zylinderlinsen 10', 11' des Teleskops 9' beide in Abstrahlrichtung vor der Strahltransformationslinse 3, wie in der Figur 3 dargestellt; oder nach der Strahltransformationslinse 3 angeordnet sein können oder die eine Zylinderlinse 11' vor und die andere Zylinderlinse 10' nach der Strahltransformationslinse 3.

Die in den Figuren 1, 2, 3 dargestellten Ausführungsformen des erfindungsgemäßen Laseranordnung sind vorzugsweise zur Laserbearbeitung von Werkstücken 5 in Verbindung mit einer die Werkstücke 5 überdeckenden Lasermaske 12 vorgesehen. Die Figur 4 zeigt den Unterschied der Strahlausbreitung des Laserstrahls 7 vor und nach der Lasermaske 12 zwischen dem erfindungsgemäßen Laserbearbeitungssystem 1 (Fig. 4b) und der aus dem Stand der Technik bekannten Laserschweißvorrichtung 14 (Fig. 4a). Bei dem in der Figur 4a gezeigten Stand der Technik trifft ein linienförmiger Laserstrahl 7 mit einem inhomogenen Strahlprofil und einer gewissen Strahldivergenz auf die Lasermaske 12. Der Laserstrahl 7 weitet sich in Richtung der Lasermaske 12 und der darunter angeordneten Werkstücke 5 auf. Die Lasermaske 12 ist mit Abstand zu den Werkstücken 5 angeordnet, so dass sich das Laserlicht, bedingt durch die Aufweitung des Laserstrahls 7, auch über den Rand der Ausnehmungen 13 der Lasermaske 12 hinaus abgeschwächt seitlich unterhalb den Ausnehmungen 13 auf den Werkstücken 5 erstrecken kann. Ein scharfer Schlagschatten durch die Lasermaske 12 ist damit nicht vorhanden, der Schlagschatten verwischt mit zunehmender Distanz vom Rand der Ausnehmungen 13. Dem gegenüber trifft bei dem in der Figur 4b dargestellten neuen Laserbearbeitungssystem 1 der ebenfalls linienförmige Laserstrahl 7 aufgrund der Homogenisierung und der Parallelisierung des Laserstrahls 7 senkrecht auf die Ausnehmungen 13 der Lasermaske 12 und auf die nicht abgedeckten Bereiche der Werkstücke 5 unterhalb der Ausnehmungen 13. Die Abbildung der Ausnehmungen 13 auf dem Werkstücken 5 ist konturenscharf und von gleichmäßiger Intensität.

## Patentansprüche

1. Laserbearbeitungssystem (1) zur Bearbeitung von Werkstücken (5), mit einer Laserstrahlquelle (6) zur Erzeugung eines Laserstrahls (7), der ein inhomogenes Strahlprofil aufweist, und mit einer in Abstrahlrichtung nach der Laserstrahlquelle (6) angeordneten Laseroptik (2) zur Formung des Laserstrahls (7) und zur Projizierung des Laserstrahls (7) auf die Werkstücke (5), wobei zwischen der Laseroptik (2) und den Werkstücken (5) eine Lasermaske (12) nahe den Werkstücken (5) angeordnet ist, **dadurch gekennzeichnet, dass** die Laseroptik (2) eine Strahltransformationslinse (3) zur Homogenisierung des Strahlprofils und in Abstrahlrichtung nach der Strahltransformationslinse (3) ein optisches Element (4) zur Kollimierung des Laserstrahls (7) aufweist, wobei die Strahltransformationslinse (3) Freiformgrenzflächen (8) aufweist, die den vor der Strahltransformationslinse (3) im Wesentlichen runden Strahlquerschnitt in einen länglichen rechteckigen, insbesondere linienförmigen Strahlquerschnitt umformen und das Strahlprofil des Laserstrahl (7) homogenisieren.

2. Laserbearbeitungssystem nach einem der vorstehenden Ansprüche, **dadurch gekennzeichnet, dass** die Strahltransformationslinse (3) eine Powell-Linse ist.

3. Laserbearbeitungssystem nach einem der vorangegangenen Ansprüche, **dadurch gekennzeichnet, dass** der Laserstrahl (7) eine Beugungsmaßzahl M² < 10 aufweist.

4. Laserbearbeitungssystem nach einem der vorangegangenen Ansprüche, **dadurch gekennzeichnet, dass** die Laserstrahlquelle (6) ein Faserlaser ist.

5. Laserbearbeitungssystem nach einem der vorangegangenen Ansprüche, **dadurch gekennzeichnet, dass** das optische Element (4) der Laseroptik (2) eine die Winkeldivergenz der Strahlung reduzierende vorzugsweise parallelisierende zylindrische Feldlinse (4) ist.

6. Laserbearbeitungssystem nach einem der vorangegangen Ansprüchen, **dadurch gekennzeichnet, dass** das optische Element (4) zur Kollimierung des Laserstrahls (7) und die optische Strahltransformationslinse (3) zur Homogenisierung des Laserstrahls (7) gemeinsam einstückig ausgebildet sind.

7. Laserbearbeitungssystem nach Anspruch 5 oder 6, **dadurch gekennzeichnet, dass** die Feldlinse (4) zu der Strahltransformationslinse (3) einen Abstand aufweist, der in etwa der Brennweite der Feldlinse (4) entspricht.

8. Laserbearbeitungssystem nach einem der vorangegangenen Ansprüche, **dadurch gekennzeichnet, dass** die Laseroptik (2) mindestens eine Zylinderlinse (10, 11) aufweist, die in Abstrahlrichtung der Laserstrahlquelle (6) vor und/oder nach der Strahltransformationslinse (3) angeordnet ist.

9. Laserbearbeitungssystem nach einem der vorangegangenen Ansprüche, **dadurch gekennzeichnet, dass** die Werkstücke (5) zu verschweißende Kunststoffwerkstücke sind.

## Claims

1. A laser processing system (1) for processing workpieces (5) including a laser beam source (6) for producing a laser beam (7), which has a non-homogeneous beam profile, and including a laser optical system (2) arranged after the laser beam source (6) in the direction of the beam for forming the laser beam (7) and for projecting the laser beam (7) onto the workpieces (5), whereby arranged near to the workpieces (5) between the laser optical system (2) and the workpieces (5) there is a laser mask (12), **characterised in that** the laser optical system (2) has a beam transformation lens (3) for homogenising the beam profile and, after the beam transformation lens (3) in the direction of the beam, an optical element (4) for collimating the laser beam (7), wherein the beam transformation lens (3) has free-form boundary surfaces (8), which reshape the substantially round beam cross-section before the beam transformation lens (3) into an elongate, rectangular, particularly linear, beam cross-section and homogenise the beam profile of the laser beam (7).

2. A laser processing system as claimed in one of the preceding claims, **characterised in that** the beam transformation lens (3) is a Powell lens.

3. A laser processing system as claimed in one of the preceding claims, **characterised in that** the laser beam (7) has a diffraction index M²<10.

4. A laser processing system as claimed in one of the preceding claims, **characterised in that** the laser beam source (6) is a fibre laser.

5. A laser processing system as claimed in one of the preceding claims, **characterised in that** the optical element (4) of the laser optical system (2) is a cylindrical field lens (4) which reduces the angular divergence of the beam and preferably makes it parallel.

6. A laser processing system as claimed in one of the preceding claims, **characterised in that** the optical element (4) for collimating the laser beam (7) and the optical beam transformation lens (3) for homogenising the laser beam (7) are constructed together in one piece.

7. A laser processing system as claimed in Claim 5 or 6, **characterised in that** the field lens (4) has a spacing from the beam transformation lens (3), which approximately corresponds to the focal length of the field lens (4).

8. A laser processing system as claimed in one of the preceding claims, **characterised in that** the laser optical system (2) has at least one cylindrical lens (10, 11), which is arranged before and/or after the beam transformation lens (3) in the beam direction.

9. A laser processing system as claimed in one of the preceding claims, **characterised in that** the workpieces (5) are plastic workpieces to be welded.

## Revendications

1. Système d'usinage au laser (1) pour l'usinage de pièces (5), avec une source de rayonnement laser (6) pour générer un faisceau laser (7) qui présente un profil de faisceau inhomogène, et avec une optique laser (2) disposée après la source de rayonnement laser (6) dans la direction de rayonnement pour mettre en forme le faisceau laser (7) et pour projeter le faisceau laser (7) sur les pièces (5), un masque laser (12) étant disposé entre l'optique laser (2) et les pièces (5) à proximité des pièces (5), **caractérisé en ce que** l'optique laser (2) présente une lentille de transformation de faisceau (3) pour homogénéiser le profil de faisceau et, après la lentille de transformation de faisceau (3) dans la direction de rayonnement, un élément optique (4) pour collimater le faisceau laser (7), la lentille de transformation de faisceau (3) présentant des surfaces limites de forme libre (8) qui transforment la section transversale de faisceau sensiblement ronde avant la lentille de transformation de faisceau (3) en une section transversale de faisceau rectangulaire allongée, en particulier linéaire, et homogénéisent le profil de faisceau du faisceau laser (7).

2. Système d'usinage au laser selon l'une des revendications précédentes, **caractérisé en ce que** la lentille de transformation de faisceau (3) est une lentille de Powell.

3. Système d'usinage au laser selon l'une des revendications précédentes, **caractérisé en ce que** le faisceau laser (7) présente un facteur de qualité M² < 10.

4. Système d'usinage au laser selon l'une des revendications précédentes, **caractérisé en ce que** la source de rayonnement laser (6) est un laser à fibre.

5. Système d'usinage au laser selon l'une des revendications précédentes, **caractérisé en ce que** l'élément optique (4) de l'optique laser (2) est une lentille de champ cylindrique (4) qui réduit, de préférence parallélise la divergence angulaire du rayonnement.

6. Système d'usinage au laser selon l'une des revendications précédentes, **caractérisé en ce que** l'élément optique (4) pour collimater le faisceau laser (7) et la lentille optique de transformation de faisceau (3) pour homogénéiser le faisceau laser (7) sont réalisés ensemble d'une seule pièce.

7. Système d'usinage au laser selon la revendication 5 ou 6, **caractérisé en ce que** la lentille de champ (4) présente par rapport à la lentille de transformation de faisceau (3) une distance qui correspond à peu près à la distance focale de la lentille de champ (4).

8. Système d'usinage au laser selon l'une des revendications précédentes, **caractérisé en ce que** l'optique laser (2) présente au moins une lentille cylindrique (10, 11) qui est disposée avant et/ou après la lentille de transformation de faisceau (3) dans la direction de rayonnement de la source de rayonnement laser (6).

9. Système d'usinage au laser selon l'une des revendications précédentes, **caractérisé en ce que** les pièces (5) sont des pièces en matière plastique à souder.
